# EUROPEAN PATENT SPECIFICATION

(11) **EP 2 761 258 B1**
(45) Date of publication and mention of the grant of the patent: **30.08.2017**
(21) Application number: 12836274.6
(22) Date of filing: 27.09.2012
(51) Int. Cl.: G01F 23/00, G01N 9/00, G01F 23/30

(54) **MEASURING SYSTEM FOR MEASUREMENT OF THE DENSITY OF A LIQUID AND ITS LEVEL IN A CONTAINER**
MESSSYSTEM ZUR MESSUNG DER DICHTE EINER FLÜSSIGKEIT UND IHRES FÜLLSTANDES IN EINEM BEHÄLTER
SYSTÈME DE MESURE DESTINÉ À MESURER LA DENSITÉ D'UN LIQUIDE ET SON NIVEAU DANS UN RÉCIPIENT

(30) Priority: 27.09.2011 SE 1150880
(43) Date of publication of application: 06.08.2014
(73) Proprietor: Scania CV AB, 151 87 Södertälje (SE)
(72) Inventor: STENLAAS, Ola, 151 48 Södertalje (SE)
(74) Representative: Scania CV AB
(86) International application number: PCT/SE2012/051023
(87) International publication number: WO 2013/048319

(56) References cited:
- US-A- 3 994 175
- US-A- 5 235 179
- US-A1- 2004 078 164
- US-A1- 2006 131 994
- US-A1- 2006 131 994
- US-A1- 2006 248 952
- US-A1- 2006 266 113
- US-A1- 2009 277 264
- US-A1- 2010 161 251

## Description

### Field of the invention

The present invention relates to a measuring system, and a method in a measuring system, for determining the density of a liquid in a container, preferably on a vehicle, according to preambles of the independent claims.

### Background to the invention

In vehicles, and also in other contexts where there are containers or tanks which hold liquid, there is a need to measure the liquid level. In the case of vehicles, this applies for example to containers which hold oil, fuel, urea or washer fluid.
One example of a level sensor often used to measure the liquid level in a container comprises a float adapted to moving along the vertical rod such that the vertical position of the float relative to the rod represents the level of the liquid in the container. The measurement is for example made at a horizontal line through the float's midpoint. The measured value is averaged for use as the level of the liquid measured.

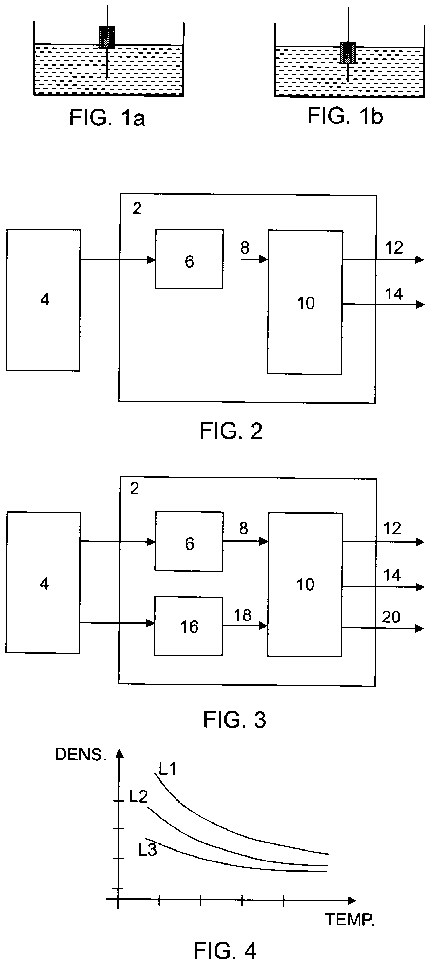

A disadvantage of such a level sensor is that it will deliver different measured values depending on the density of the liquid, as schematically illustrated in Figures 1a and 1b, which depict a container holding a liquid and provided with a level sensor of the type described above which involves a float. The vertical position of the float depends inter alia on the relationship between its weight and that of the displaced liquid, according to the Archimedes principle.
The density of the liquid in Figure 1a is greater than that of the liquid in Figure 1b, with the result that the float is significantly higher in Figure 1a.
If the level is measured at the float's centreline, the level sensor in Figure 1a will indicate a higher than actual liquid level and the level sensor in Figure 1b will indicate a lower than actual liquid level.

It may therefore be found that a given liquid volume gives different level indications depending on the density of the liquid (and also to some extent depending on the surface tension of the liquid), resulting in a discrepancy when using a measuring sensor which employs a float.

The density of the liquid also affects for example calculations in the control system and the regulating of flows. These too might be improved if the density was known.
There may also be risk that different liquids may be confused or knowingly exchanged without it being possible for today's sensors to measure this. If the density of the liquid is known, this information may be used to reduce this risk.

US 5,471,873 refers to a device for measuring the density of a liquid. It comprises a float suspended by two springs and makes it possible to use the action of the liquid on the vertical position of the float to determine the density of the liquid.

WO-2007/086873 refers to a level measuring device which is likewise adapted to determining the density. It employs an elongate magnetostrictive sensor and at least two sensor magnets in floats which can move freely along the elongate sensor. One of the floats is adapted to determining the density and the other determines the level.

US 2009/0277264 A1 refers to an assembly for measuring both the level and specific gravity of a liquid in a container, including a first sensor arrangement for sensing the level of the liquid in the container, and a second sensor arrangement for sensing the specific gravity of the liquid.

US 2006/0248952 A1 refers to an apparatus for measuring the density of a fluid. The apparatus includes a shaft adapted to be positioned within a fluid and a biased float disposed on the shaft and capable of movement along the shaft.

US 2006/0266113 A1 refers to a magnetorestrictive fuel level probe including a springloaded foot. The probe shaft of the fuel level probe moves up and down within the springloaded foot as a function of fuel density.

US 3,994,175 refers to a device for detecting the specific gravity and level of liquid in a container comprising a light source, a photoelectric transducer positioned in light receiving relationship with respect to the light source, a float which has a predetermined specific gravity and is displaced depending upon the change in specific gravity and level of the liquid, and means operatively coupled to the float so as to permit or interrupt the light transmission from the light source to the photoelectric transducer.

US 2006/0131994 A1 refers to a vibration detector for determining and/or monitoring a predetermined fill level in a container. The detector includes an oscillatable unit, a driver/receiver unit and an evaluation unit.

There is thus a need to be able to determine the density of a liquid, particularly in the context of the measurement of liquid levels, and the object of the present invention is to propose an improved measuring system which not only measures the liquid level but can also determine the density of the liquid.

### Summary of the invention

The above objects are achieved with the invention defined by the independent claims.

Preferred embodiments are defined by the dependent claims.

The present invention is based on the inventor's insight that the density of a liquid can be determined by examining its dynamic characteristics.

Thus a measure of a liquid's density is arrived at by analysing the frequency, or frequency and amplitude, of its surface variations when the container moves and causes the liquid to splash. This means that a modified and corrected liquid level can be determined.

One embodiment analyses a representation of the frequency, or frequency and amplitude, of the liquid surface variations in the form of a sensor signal when the container moves and causes the liquid to splash, making it possible to arrive at a measure of the liquid's density.

In one embodiment the sensor unit comprises a float whose movements in response to splashing and other changes of level will depend on the liquid's density (and to some extent its surface tension). The float will perform a reciprocating movement and it is possible by analysing the frequency, or frequency and amplitude, of its movements to determine the liquid's force action upon the float. This force action may then be related to the density and the surface tension.

The invention is also suitable for other level sensors, e.g. optical level sensors which monitor variations in the liquid level optically, or ultrasonic-based level sensors whereby changes in the liquid level affect ultrasonic waves applied.

Different liquids may be confused in that they may have the same density at a given temperature but have a temperature-dependent density. One preferred embodiment uses this fact to determine what kind of liquid is in the container, which is done by determining its density at various temperatures and comparing coordinated density and temperature values with corresponding values for different liquids. It is thus possible to determine what kind of liquid is in the container.

The measuring system, and the method, according to the present invention may thus achieve more reliable detection of the liquid level in containers in vehicles by determining the density of the liquid and taking it into account in determining the liquid level. According to the present invention, the density is determined by using the existing level sensor. In one embodiment it is also possible by also measuring the liquid's temperature to determine what kind of liquid is in the container.

### Brief description of drawings

Figures 1a and 1b depict schematically two containers filled with liquid with different densities.
Figure 2 is a block diagram schematically illustrating the present invention.
Figure 3 is a block diagram schematically illustrating an embodiment of the present invention.
Figure 4 is a graph of the relationship between temperature and density for different liquids.
Figure 5 is a flowchart illustrating the present invention.

### Detailed description of preferred embodiments of the invention

The present invention will now be described in detail with reference initially to Figure 2 which is a block diagram schematically illustrating the present invention.

The invention relates to a measuring system 2 for measuring the level of a liquid in a container 4 which may be a container or tank on board a vehicle, e.g. a truck, bus or car, but also for example on a watercraft. The liquid in the container may for example be oil, diesel fuel, petrol, washer fluid or a reducing agent, e.g. urea.

The measuring system comprises a sensor unit 6 adapted to delivering a sensor signal 8 which represents the level of the liquid in the container 4. This signal constitutes a representation of the liquid's level in the container. The signal may take the form of a substantially continuous representation of the liquid's level in the container between an applicable minimum level and an applicable maximum level for the liquid in the container. The signal may constitute a substantially discrete representation of the liquid's level in the container, in which case the representation of the liquid's level takes the form of a plurality of discrete steps/points/values between an applicable minimum level and an applicable maximum level for the liquid in the container.

Variations in the amplitude and/or frequency of the liquid level in the container thus result in corresponding variations in the sensor signal. The signal's variations in amplitude and/or frequency thus constitute a representation of the liquid level's variations in amplitude and/or frequency in the container.

The measuring system 2 further comprises a density measuring unit 10 adapted to receiving the sensor signal 8, to analysing the signal's variations in frequency, or frequency and amplitude, and using this analysis as a basis for determining the liquid's density, and to delivering a density signal 12 which represents the liquid's density.

One embodiment conducts the analysis over a predetermined period of time preferably within the range from 0 to 60 minutes. This period may be regarded as a time window which constantly moves and which defines the amount of the sensor signal time being analysed.

The analysis of the sensor signal's amplitude is done in one embodiment by determining a mean value of it over the predetermined period of time, comparing the measured amplitude with this mean value and then generating an amplitude value based on the comparison.

In another embodiment the analysis of the sensor signal's amplitude is done by determining the peak-to-peak value of the signal over said predetermined period of time, e.g. the maximum peak-to-peak value, and generating an amplitude value based on that value.

The amplitude value determined is then compared with one or more threshold levels which represent different density values, and the sensor signal is generated on the basis of the result of this comparison.

It is generally the case that there is a relationship between the amplitude of the sensor signal and the density of the liquid, e.g. the higher the amplitude of the signal the greater the density.

According to a further embodiment, the density measuring unit 10 is adapted to determining the change in amplitude values over said predetermined period of time and then determining the liquid's density on the basis of this change. In this case the predetermined period of time is preferably divided into a number of subperiods, e.g. between 5 and 15, and an amplitude value is determined for each of them. This measurement may for example be initiated when the vehicle has come to a halt and it is then possible, by measuring the splashing in the tank, to obtain a measure of the density by seeing how the amplitude decays. How quickly the decay takes place provides a measure of the density.

In one variant of this embodiment the predetermined period of time comprises a number of subperiods and the analysis of the sensor signal's amplitude is done by determining a mean value of the amplitude over said subperiods, comparing the measured amplitude with this mean value and generating on the basis of the comparison an amplitude value for the subperiod. The change in the amplitude values over the predetermined period of time is determined and the liquid's density is determined on the basis of this change. In another variant of this embodiment the predetermined period of time comprises a number of subperiods and the analysis of the sensor signal's amplitude is done by determining the peak-to-peak value of the amplitude over said subperiod and generating an amplitude value on the basis of that value for the subperiod. The change in the amplitude values over the predetermined period of time is determined and the liquid's density is determined on the basis of this change.

According to the inventive measuring system, the analysis of the sensor signal's frequency is done by determining a frequency value over the predetermined period of time and comparing the frequency value determined with one or more threshold levels which represent different density values. These one or more threshold levels for the frequency are preferably within the range 1-100 Hz.

The analysis of the sensor signal is thus conducted with respect to the frequency as described above. The analysis may also be done by examining both the amplitude and the frequency. Reliable and robust determination of the density may thus be achieved.

As discussed in the background section, the sensor unit 6 may for example comprise a float, in which case the signal 8 delivered by the sensor depends on the float's vertical position.

In another embodiment the sensor unit takes the form of an optical sensor.

And in a further embodiment the sensor unit takes the form of an ultrasonic sensor.

When the density has been determined, this information may be used to modify the sensor signal so that the liquid's density is taken into account. Thus the density measuring unit 10 is adapted to delivering a modified sensor signal 14 which has been adjusted with respect to the density determined. This may for example be done by determining an adjustment factor which is positive or negative depending on the liquid's density. In cases where the sensor unit comprises a float, the adjustment factor may be positive if the density of the liquid is relatively low and negative if the density is relatively high.

There is a relationship between a liquid's temperature and density. Figure 4 is a graph schematically illustrating this relationship for three different liquids L1, L2 and L3. As the graph shows, the density increases with decreasing temperature. By determining the temperature of a liquid at at least two different temperatures and determining the density at these same temperatures it is possible to identify a specific curve which may then be used to determine what the liquid is.

Figure 3 is a block diagram schematically illustrating an embodiment of the present invention which is adapted to identifying what kind of liquid is in the container. In this embodiment the measuring system comprises a temperature sensor 16 adapted to determining the liquid's temperature and to delivering on the basis of the measured temperature a temperature signal 18 to the density measuring unit 10. The temperature sensor is preferably situated in the lower portion of the container. The density measuring unit is adapted to determining the liquid's density at at least two different temperatures, coordinated density and temperature values are compared with stored density and temperature values for different liquids and any match with any of the stored values is used as a basis for generating a liquid signal 20 which indicates what kind of liquid is in the container.

The present invention comprises also a method in a measuring system for the measurement of the level and density of a liquid in a container, comprising a sensor unit adapted to delivering a sensor signal which represents the liquid's level in the container.

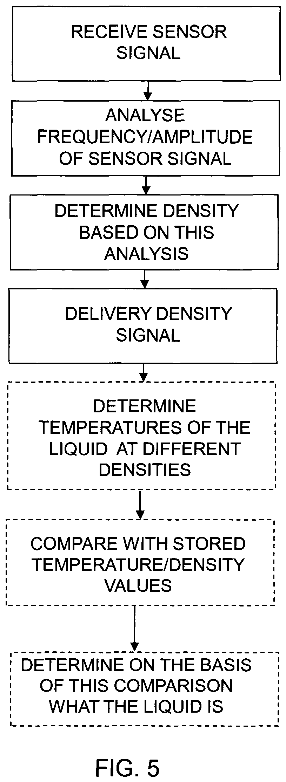

The method will now be described with reference to the flowchart in Figure 5, in which the method steps pertaining to the embodiment which are related to temperature measurement are bordered by broken lines.

The method according to the invention comprises the steps of
- receiving said sensor signal in a density measuring unit,
- analysing in the density measuring unit the sensor signal's variations in frequency, or frequency and amplitude,
- determining the liquid's density on the basis of this analysis, and
- delivering a density signal which represents the liquid's density.

The analysis is preferably conducted over a predetermined period of time within the range 1-60 minutes.

In one embodiment the analysis of the sensor signal's amplitude is done by determining a mean value of the amplitude over the predetermined period of time, comparing the measured amplitude with this mean value and generating an amplitude value on the basis of the comparison.

In another embodiment the analysis of the sensor signal's amplitude is done by determining the peak-to-peak value of the sensor signal over the predetermined period of time and generating an amplitude value on the basis of that value.

The amplitude value determined is compared with one or more threshold levels which represent different density values.

In a further embodiment, the density measuring unit is adapted to determining the change in the amplitudes over the predetermined period of time and to determining the liquid's density on the basis of this change. This is done in the way described above by dividing the predetermined period of time into a number of subperiods.

The analysis of the sensor signal's frequency is done by determining a frequency value over said predetermined measuring period and comparing the frequency value determined with one or more threshold levels which represent different density values. Said one or more threshold levels for the frequency are within the range 1-100 Hz.

The analysis may thus be done by both examining the sensor signal's amplitude and by examining its frequency. It may also be done by examining how both its amplitude and frequency vary.

The density measuring unit may further be adapted to delivering a modified sensor signal which has been adjusted with respect to the density determined.

In one embodiment the method comprises receiving in the density measuring unit a temperature signal which represents the liquid's temperature, and the density measuring unit is adapted to determining the liquid's density at at least two different temperatures. Coordinated density and temperature values are compared with stored density and temperature values for different liquids and any match with any of the stored values is used as a basis for generating a liquid signal which indicates what kind of liquid is in the container.

The present invention is not confined to the preferred embodiments described above. Sundry alternatives, modifications and equivalents may be used. The above embodiments are therefore not to be regarded as limiting the invention's protective scope which is defined by the attached claims.

## Claims

1. A measuring system (2) for the measurement of the level and density of a liquid in a container (4), comprising a sensor unit (6) adapted to delivering a sensor signal (8) which represents the liquid's level in the container (4), and a density measuring unit (10) adapted to receiving said sensor signal (8) which represents the liquid's level in the container (4),
**characterised in that** the density measuring unit (10) is adapted to analysing the frequency of the liquid surface variations as represented by the sensor signal's variations in frequency, where said analysis is conducted over a predetermined period of time and where the analysis of the frequency of the sensor signal (8) is done by determining a frequency value over said predetermined measuring period and comparing the frequency value determined with one or more threshold levels which represent different density values, and using this analysis as a basis for determining the liquid's density, and delivering a density signal (12) which represents the liquid's density.

2. The measuring system according to claim 1, in which the density measuring unit (10) is further adapted to analysing the amplitude of the liquid surface variations as represented by the sensor signal's variations in amplitude, where said analysis is conducted over said predetermined period of time, and using this analysis as a basis for determining the liquid's density.

3. The measuring system according to claim 2, in which the analysis of the amplitude of the sensor signal (8) is done by determining a mean value for the amplitude over said predetermined period of time, comparing the measured amplitude with this mean value and generating an amplitude value on the basis of the comparison.

4. The measuring system according to claim 2, in which the analysis of the amplitude of the sensor signal (8) is done by determining the peak-to-peak value of the sensor signal over said predetermined period of time and generating an amplitude value on the basis of that value.

5. The measuring system according to claim 3 or 4, in which said amplitude value is compared with one or more threshold levels which represent different density values.

6. The measuring system according to claim 2, in which said predetermined period of time comprises a number of subperiods and the analysis of the amplitude of the sensor signal (8) is done by determining a mean value for the amplitude over said subperiod, comparing the measured amplitude with this mean value, generating an amplitude value for the subperiod on the basis of the comparison, with determination of the change in amplitude values over said predetermined period of time, and determining the liquid's density on the basis of this change.

7. The measuring system according to claim 2, in which said predetermined period of time comprises a number of subperiods and the analysis of the amplitude of the sensor signal (8) is done by determining the peak-to-peak value of the amplitude over said subperiod, comparing the measured amplitude with this mean value, generating an amplitude value for the subperiod on the basis of the comparison, with determination of the change in amplitude values over said predetermined period of time, and determining the density of the liquid on the basis of this change.

8. The measuring system according to claim 1, in which said one or more threshold levels of the frequency are within the range 1-100 Hz.

9. The measuring system according to any one of claims 1-8, in which said predetermined period of time is within the range 0-60 minutes.

10. The measuring system according to any one of claims 1-9, in which said sensor unit (6) comprises a float and said sensor signal (8) is delivered on the basis of the float's vertical position.

11. The measuring system according to any one of claims 1-9, in which said sensor unit (6) is an optical sensor.

12. The measuring system according to any one of claims 1-9, in which said sensor unit (6) is an ultrasonic sensor.

13. The measuring system according to any one of claims 1-12, in which the density measuring unit (10) is adapted to delivering a modified sensor signal (14) which has been adjusted with respect to the density determined.

14. The measuring system according to any one of claims 1-13, such that the measuring system comprises a temperature sensor (16) adapted to determining the liquid's temperature and to delivering on the basis of the measured temperature a temperature signal (18) to the density measuring unit (10), the density measuring unit (10) is adapted to determining the liquid's density at at least two different temperatures, coordinated density and temperature values are compared with stored density and temperature values for different liquids and any match with any of the stored values is used as a basis for generating a liquid signal (20) which indicates what kind of liquid is in the container.

15. A method in a measuring system for measurement of the level and density of a liquid in a container, comprising a sensor unit adapted to delivering a sensor signal which represents the liquid's level in the container, the method comprising the step of
- receiving said sensor signal in a density measuring unit,
**characterised in that** the method further comprises the steps of
- analysing in the density measuring unit the sensor signal's variations in frequency of the liquid surface, where said analysis is conducted over a predetermined period of time, and where the analysis of the frequency of the sensor signal is done by determining a frequency value over said predetermined measuring period and comparing the frequency value determined with one or more threshold levels which represent different density values,
- determining the liquid's density on the basis of this analysis, and
- delivering a density signal which represents the liquid's density.

16. The method according to claim 15, further comprising the step of analysing in the density measuring unit the sensor signal's variations in amplitude, where said analysis is conducted over said predetermined period of time.

17. The method according to claim 16, in which the analysis of the amplitude of the sensor signal is done by determining a mean value for the amplitude over said predetermined period of time, comparing the amplitude measured with this mean value and generating an amplitude value on the basis of the comparison.

18. The method according to claim 16, in which the analysis of the amplitude of the sensor signal is done by determining the peak-to-peak value of the sensor signal over said predetermined period of time and generating an amplitude value on the basis of that value.

19. The method according to claim 17 or 18, in which said amplitude value is compared with one or more threshold levels which represent different density values.

20. The method according to claim 16, in which said predetermined period of time comprises a number of subperiods and the analysis of the amplitude of the sensor signal is done by determining a mean value of the amplitude over said subperiod, comparing the measured amplitude with this mean value, generating an amplitude value for the subperiod on the basis of the comparison, with determination of the change in amplitude values over said predetermined period of time, and determining the density of the liquid on the basis of this change.

21. The method according to claim 16, in which said predetermined period of time comprises a number of subperiods and the analysis of the amplitude of the sensor signal is done by determining the peak-to-peak value of the amplitude over said subperiod, comparing the measured amplitude with this mean value, generating an amplitude value for the subperiod on the basis of the comparison, with determination of the change in amplitude values over said predetermined period of time, and determining the density of the liquid on the basis of this change.

22. The method according to claim 15, in which said one or more threshold levels of the frequency are within the range 1-100 Hz.

23. The method according to any one of claims 15-22, in which said predetermined period of time is within the range 0-60 minutes.

24. The method according to any one of claims 15-23, in which the density measuring unit is adapted to delivering a modified sensor signal which has been adjusted with respect to the density determined.

25. The method according to any one of claims 15-24, such that the method comprises receiving in the density measuring unit a temperature signal representing the liquid's temperature, the density measuring unit is adapted to determining the liquid's density at at least two different temperatures, coordinated density and temperature values are compared with stored density and temperature values for different liquids and any match with any of the stored values is used as a basis for generating a liquid signal which indicates what kind of liquid is in the container.

## Patentansprüche

1. Messsystem (2) zur Messung des Füllstands und der Dichte einer Flüssigkeit in einem Behälter (4), das eine Sensoreinheit (6), die zum Liefern eines Sensorsignals (8), das den Füllstand der Flüssigkeit im Behälter (4) repräsentiert, eingerichtet ist, und eine Dichtemesseinheit (10) aufweist, die zum Empfangen des Sensorsignals (8), das den Füllstand der Flüssigkeit im Behälter (4) repräsentiert, eingerichtet ist,
**dadurch gekennzeichnet, dass** die Dichtemesseinheit (10) zum Analysieren der Frequenz der Änderungen der Flüssigkeitsoberfläche, die durch die Frequenzschwankungen des Sensorsignals repräsentiert werden, eingerichtet ist, wobei die Analyse über einen vorgegebenen Zeitraum ausgeführt wird, und wobei die Analyse der Frequenz des Sensorsignals (8) durch Bestimmen eines Frequenzwertes über den vorgegebenen Messzeitraum und Vergleichen des bestimmten Frequenzwertes mit einem oder mehreren Schwellenpegeln, die unterschiedliche Dichtewerte repräsentieren, erfolgt, und diese Analyse als Basis zur Bestimmung der Dichte der Flüssigkeit und zur Lieferung eines Dichtesignals (12) dient, das die Dichte der Flüssigkeit repräsentiert.

2. Messsystem nach Anspruch 1, wobei die Dichtemesseinheit (10) ferner zur Analyse der Amplitude der Änderungen der Flüssigkeitsoberfläche, die durch Amplitudenschwankungen des Sensorsignals repräsentiert werden, eingerichtet ist, wobei die Analyse über den vorgegebenen Zeitraum ausgeführt wird, und diese Analyse als Basis zur Bestimmung der Dichte der Flüssigkeit dient.

3. Messsystem nach Anspruch 2, wobei die Analyse der Amplitude des Sensorsignals (8) durch Bestimmen eines Mittelwertes der Amplitude über einen vorgegebenen Zeitraum, Vergleichen der gemessenen Amplitude mit diesem Mittelwert und Erzeugen eines Amplitudenwertes auf Basis des Vergleichs erfolgt.

4. Messsystem nach Anspruch 2, wobei die Analyse der Amplitude des Sensorsignals (8) durch Bestimmen des Spitze-Spitze-Wertes des Sensorsignals über den vorgegebenen Zeitraum und Erzeugen eines Amplitudenwertes auf Basis dieses Wertes erfolgt.

5. Messsystem nach Anspruch 3 oder 4, wobei der Amplitudenwert mit einem oder mehreren Schwellenpegeln verglichen wird, die unterschiedliche Dichtewerte repräsentieren.

6. Messsystem nach Anspruch 2, wobei der vorgegebene Zeitraum eine Anzahl Unterzeiträume aufweist, und die Analyse der Amplitude des Sensorsignals (8) durch Bestimmen eines Mittelwertes der Amplitude über den vorgegebenen Zeitraum erfolgt, die gemessene Amplitude mit diesem Mittelwert verglichen, ein Amplitudenwert für den Unterzeitraum auf Basis des Vergleichs mit der bestimmten Änderung der Amplitudenwerte über den vorgegebenen Zeitraum erzeugt und die Dichte der Flüssigkeit auf Basis dieser Änderung bestimmt wird.

7. Messsystem nach Anspruch 2, wobei der vorgegebene Zeitraum eine Anzahl Unterzeiträume aufweist, und die Analyse der Amplitude des Sensorsignals (8) durch Bestimmen des Spitze-Spitze-Wertes des Sensorsignals über den Unterzeitraum, Vergleichen der gemessenen Amplitude mit diesem Mittelwert, Erzeugen eines Amplitudenwertes für den Unterzeitraum auf Basis des Vergleichs mit der bestimmten Änderung der Amplitudenwerte über den vorgegebenen Zeitraum und Bestimmen der Dichte der Flüssigkeit auf Basis dieser Änderung erfolgt.

8. Messsystem nach Anspruch 1, wobei der eine oder die mehreren Schwellenpegel der Frequenz innerhalb des Bereichs von 1 bis 100 Hz liegen.

9. Messsystem nach einem der Ansprüche 1 bis 8, wobei der vorgegebene Zeitraum innerhalb des Bereichs von 1 bis 60 Minuten liegt.

10. Messsystem nach einem der Ansprüche 1 bis 9, wobei die Sensoreinheit (6) einen Schwimmer aufweist, und das Sensorsignal (8) auf Basis der senkrechten Position des Schwimmers geliefert wird.

11. Messsystem nach einem der Ansprüche 1 bis 9, wobei die Sensoreinheit (6) ein optischer Sensor ist.

12. Messsystem nach einem der Ansprüche 1 bis 9, wobei die Sensoreinheit (6) ein Ultraschallsensor ist.

13. Messsystem nach einem der Ansprüche 1 bis 12, wobei die Dichtemesseinheit (10) zum Liefern eines modifizierten Sensorsignals (14) eingerichtet ist, das bezüglich der bestimmten Dichte angepasst worden ist.

14. Messsystem nach einem der Ansprüche 1 bis 13, wobei das Messsystem einen Temperatursensor (16) aufweist, der zum Bestimmen der Flüssigkeit und zum Liefern eines Temperatursignals (18) auf Basis der gemessenen Temperatur an die Dichtemesseinheit (10) eingerichtet ist, wobei die Dichtemesseinheit (10) zum Bestimmen der Dichte der Flüssigkeit bei mindestens zwei verschiedenen Temperaturen eingerichtet ist, koordinierte Dichte- und Temperaturwerte mit gespeicherten Dichte- und Temperaturwerten für verschiedene Flüssigkeiten verglichen werden, und eine Übereinstimmung mit einem der gespeicherten Werte als Basis zum Erzeugen eines Flüssigkeitssignals (20) dient, das die Art der Flüssigkeit im Behälter angibt.

15. Verfahren eines Messsystems Messung des Füllstandes und der Dichte einer Flüssigkeit in einem Behälter, das eine Sensoreinheit aufweist, die zum Liefern eines Sensorsignals eingerichtet ist, das den Füllstand der Flüssigkeit im Behälter repräsentiert, wobei das Verfahren den Schritt des
- Empfangens des Sensorsignals in einer Dichtemesseinheit aufweist,
**dadurch gekennzeichnet, dass** das Verfahren ferner die Schritte aufweist:
- Analysieren der Sensorsignalschwankungen in der Dichtemesseinheit auf Basis der Frequenz der Flüssigkeitsoberfläche, wobei die Analyse über einen vorgegebenen Zeitraum ausgeführt wird, und wobei die Analyse der Frequenz des Sensorsignals durch Bestimmen eines Frequenzwertes über den vorgegebenen Messzeitraum und Vergleichen des bestimmten Frequenzwertes mit einem oder mehreren Schwellenpegeln, die unterschiedliche Dichtewerte repräsentieren, erfolgt,
- Bestimmen der Dichte der Flüssigkeit auf Basis dieser Analyse, und
- Liefern eines Dichtesignals, das die Dichte der Flüssigkeit repräsentiert.

16. Verfahren nach Anspruch 15, das ferner den Schritt der Analyse der Schwankungen der Sensorsignalamplitude in der Dichtemesseinheit aufweist, wobei diese Analyse über den vorgegebenen Zeitraum erfolgt.

17. Verfahren nach Anspruch 16, bei dem die Analyse der Amplitude des Sensorsignals durch Bestimmen eines Mittelwertes für die Amplitude über den vorgegebenen Zeitraum, Vergleichen der gemessenen Amplitude mit diesem Mittelwert und Erzeugen eines Amplitudenwertes auf Basis des Vergleichs erfolgt.

18. Verfahren nach Anspruch 16, bei dem die Analyse der Amplitude des Sensorsignals durch Bestimmen des Spitze-Spitze-Wertes des Sensorsignals über den vorgegebenen Zeitraum und durch Erzeugen eines Amplitudenwertes auf Basis dieses Wertes erfolgt.

19. Verfahren nach Anspruch 17 oder 18, bei dem der Amplitudenwert mit einem oder mehreren Schwellenpegeln, die verschiedene Dichtewerte repräsentieren, verglichen wird.

20. Verfahren nach Anspruch 16, bei dem der vorgegebene Zeitraum eine Anzahl Unterzeiträume aufweist, und die Analyse der Amplitude des Sensorsignals durch Bestimmen eines Mittelwertes des Sensorsignals über den Unterzeitraum, Vergleichen der gemessenen Amplitude mit diesem Mittelwert, Erzeugen eines Amplitudenwertes für den Unterzeitraum auf Basis auf Basis des Vergleichs mit der bestimmten Änderung der Amplitudenwerte über den vorgegebenen Zeitraum und Bestimmen der Dichte der Flüssigkeit auf Basis dieser Änderung erfolgt.

21. Verfahren nach Anspruch 16, bei dem der vorgegebene Zeitraum eine Anzahl Unterzeiträume aufweist, und die Analyse der Amplitude des Sensorsignals durch Bestimmen des Spitze-Spitze-Wertes des Sensorsignals über den Unterzeitraum, Vergleichen der gemessenen Amplitude mit diesem Mittelwert, Erzeugen eines Amplitudenwertes für den Unterzeitraum auf Basis des Vergleichs mit der bestimmten Änderung der Amplitudenwerte über den vorgegebenen Zeitraum und Bestimmen der Dichte der Flüssigkeit auf Basis dieser Änderung erfolgt.

22. Verfahren nach Anspruch 15, bei dem der eine oder die mehreren Schwellenpegel der Frequenz innerhalb des Bereichs von 1 bis 100 Hz liegen.

23. Verfahren nach einem der Ansprüche 15 bis 22, bei dem der vorgegebene Zeitraum innerhalb des Bereichs von 1 bis 60 Minuten liegt.

24. Verfahren nach einem der Ansprüche 15 bis 24, bei dem die Dichtemesseinheit zum Liefern eines modifizierten Sensorsignals eingerichtet ist, das bezüglich der bestimmten Dichte angepasst worden ist.

25. Verfahren nach einem der Ansprüche 15 bis 24, wobei das Verfahren das Empfangen eines Temperatursignals, das die Temperatur de Flüssigkeit repräsentiert, in der Dichtemesseinheit aufweist, wobei die Dichtemesseinheit zum Bestimmen der Dichte der Flüssigkeit bei mindestens zwei verschiedenen Temperaturen eingerichtet ist, koordinierte Dichte- und Temperaturwerte mit gespeicherten Dichte- und Temperaturwerten für verschiedene Flüssigkeiten verglichen werden, und eine Übereinstimmung mit einem der gespeicherten Werte als Basis zum Erzeugen eines Flüssigkeitssignals dient, das die Art der Flüssigkeit im Behälter angibt.

## Revendications

1. Système de mesure (2) pour la mesure du niveau et de la densité d'un liquide dans un récipient (4), comprenant une unité de capteur (6) adaptée de façon à délivrer un signal de capteur (8) qui représente le niveau du liquide dans le récipient (4), et une unité de mesure de densité (10) adaptée de façon à recevoir ledit signal de capteur (8) qui représente le niveau du liquide dans le récipient (4),
**caractérisé en ce que** l'unité de mesure de densité (10) est adaptée de façon à analyser la fréquence des variations de surface de liquide, représentée par des variations de fréquence du signal de capteur, ladite analyse étant effectuée pendant une période de temps prédéterminée et l'analyse de la fréquence du signal de capteur (8) étant effectuée en déterminant une valeur de fréquence pendant ladite période de mesure prédéterminée et en comparant la valeur de fréquence déterminée à un ou à plusieurs niveaux de seuil qui représentent des valeurs de densité différentes, et en utilisant cette analyse comme base pour déterminer la densité du liquide, et en délivrant un signal de densité (12) qui représente la densité du liquide.

2. Système de mesure selon la revendication 1, dans lequel l'unité de mesure de densité (10) est de plus adaptée de façon à analyser l'amplitude des variations de surface de liquide, représentée par des variations d'amplitude du signal de capteur, ladite analyse étant effectuée pendant ladite période de temps prédéterminée, et à utiliser cette analyse comme base pour déterminer la densité du liquide.

3. Système de mesure selon la revendication 2, dans lequel l'analyse de l'amplitude du signal de capteur (8) est effectuée par la détermination d'une valeur moyenne de l'amplitude pendant ladite période de temps prédéterminée, la comparaison de l'amplitude mesurée à cette valeur moyenne et la génération d'une valeur d'amplitude en fonction de la comparaison.

4. Système de mesure selon la revendication 2, dans lequel l'analyse de l'amplitude du signal de capteur (8) est effectuée en déterminant la valeur crête-à-crête du signal de capteur pendant ladite période de temps prédéterminée et en générant une valeur d'amplitude en fonction de cette valeur.

5. Système de mesure selon la revendication 3 ou 4, dans lequel ladite valeur d'amplitude est comparée à un ou à plusieurs niveaux de seuil qui représentent des valeurs de densité différentes.

6. Système de mesure selon la revendication 2, dans lequel ladite période de temps prédéterminée comprend un certain nombre de sous-périodes et l'analyse de l'amplitude du signal de capteur (8) est effectuée par une détermination d'une valeur moyenne pour l'amplitude pendant ladite sous-période, une comparaison de l'amplitude mesurée à cette valeur moyenne, une génération d'une valeur d'amplitude pour la sous-période en fonction de la comparaison, avec une détermination du changement dans les valeurs d'amplitude pendant ladite période de temps prédéterminée, et en déterminant la densité du liquide en fonction de ce changement.

7. Système de mesure selon la revendication 2, dans lequel ladite période de temps prédéterminée comprend un certain nombre de sous-périodes et l'analyse de l'amplitude du signal de capteur (8) est effectuée par une détermination de la valeur crête-à-crête de l'amplitude pendant ladite sous-période, une comparaison de l'amplitude mesurée à cette valeur moyenne, une génération d'une valeur d'amplitude pour la sous-période en fonction de la comparaison, avec une détermination du changement dans les valeurs d'amplitude pendant ladite période de temps prédéterminée, et en déterminant la densité du liquide en fonction de ce changement.

8. Système de mesure selon la revendication 1, dans lequel lesdits niveaux de seuil au nombre d'un ou de plusieurs de la fréquence sont situés dans la plage allant de 1 à 100 Hz.

9. Système de mesure selon l'une quelconque des revendications 1 à 8, dans lequel ladite période de temps prédéterminée est située dans la plage allant de 0 à 60 minutes.

10. Système de mesure selon l'une quelconque des revendications 1 à 9, dans lequel ladite unité de capteur (6) comprend un flotteur et ledit signal de capteur (8) est délivré en fonction de la position verticale du flotteur.

11. Système de mesure selon l'une quelconque des revendications 1 à 9, dans lequel ladite unité de capteur (6) est un capteur optique.

12. Système de mesure selon l'une quelconque des revendications 1 à 9, dans lequel ladite unité de capteur (6) est un capteur à ultrasons.

13. Système de mesure selon l'une quelconque des revendications 1 à 12, dans lequel l'unité de mesure de densité (10) est adaptée de façon à délivrer un signal de capteur modifié (14) qui a été ajusté vis-à-vis de la densité déterminée.

14. Système de mesure selon l'une quelconque des revendications 1 à 13, tel que le système de mesure comprend un capteur de température (16) adapté de façon à déterminer la température du liquide et à délivrer, en fonction de la température mesurée, un signal de température (18) à l'unité de mesure de densité (10), l'unité de mesure de densité (10) étant adaptée de façon à déterminer la densité du liquide à au moins deux températures différentes, des valeurs de densité et de température coordonnées étant comparées à des valeurs de densité et de température mémorisées pour différents liquides, et toute concordance avec l'une quelconque des valeurs mémorisées étant utilisée comme base pour la génération d'un signal de liquide (20) qui indique quel type de liquide se trouve dans le récipient.

15. Procédé, dans un système de mesure pour la mesure du niveau et de la densité d'un liquide dans un récipient, comprenant une unité de capteur adaptée de façon à délivrer un signal de capteur qui représente le niveau du liquide dans le récipient, le procédé comprenant l'étape de :
- réception dudit signal de capteur par une unité de mesure de densité,
**caractérisé en ce que** le procédé comprend de plus les étapes de :
- analyser, dans l'unité de mesure de densité, les variations, en fréquence de la surface de liquide, du signal de capteur,
ladite analyse étant effectuée pendant une période de temps prédéterminée et l'analyse de la fréquence du signal de capteur étant effectuée par en déterminant une valeur de fréquence pendant ladite période de mesure prédéterminée et en comparant la valeur de fréquence déterminée à un ou à plusieurs niveaux de seuil qui représentent des valeurs de densité différentes,
- déterminer la densité du liquide en fonction de cette analyse, et
- délivrer un signal de densité qui représente la densité du liquide.

16. Procédé selon la revendication 15, comprenant de plus l'étape d'analyser, dans l'unité de mesure de densité, des variations en amplitude du signal de capteur, ladite analyse étant effectuée pendant ladite période de temps prédéterminée.

17. Procédé selon la revendication 16, dans lequel l'analyse de l'amplitude du signal de capteur est effectuée par une détermination d'une valeur moyenne pour l'amplitude pendant ladite période de temps prédéterminée, une comparaison de l'amplitude mesurée à cette valeur moyenne et une génération d'une valeur d'amplitude en fonction de la comparaison.

18. Procédé selon la revendication 16, dans lequel l'analyse de l'amplitude du signal de capteur est effectuée par une détermination de la valeur crête-à-crête du signal de capteur pendant ladite période de temps prédéterminée et une génération d'une valeur d'amplitude en fonction de cette valeur.

19. Procédé selon la revendication 17 ou 18, dans lequel ladite valeur d'amplitude est comparée à un ou à plusieurs niveaux de seuil qui représentent des valeurs de densité différentes.

20. Procédé selon la revendication 16, dans lequel ladite période de temps prédéterminée comprend un certain nombre de sous-périodes et l'analyse de l'amplitude du signal de capteur est effectuée par une détermination d'une valeur moyenne de l'amplitude pendant ladite sous-période, une comparaison de l'amplitude mesurée à cette valeur moyenne, une génération d'une valeur d'amplitude pour la sous-période en fonction de la comparaison, avec une détermination du changement dans les valeurs d'amplitude pendant ladite période de temps prédéterminée, et une détermination de la densité du liquide en fonction de ce changement.

21. Procédé selon la revendication 16, dans lequel ladite période de temps prédéterminée comprend un certain nombre de sous-périodes et l'analyse de l'amplitude du signal de capteur est effectuée par une détermination de la valeur crête-à-crête de l'amplitude pendant ladite sous-période, une comparaison de l'amplitude mesurée à cette valeur moyenne, une génération d'une valeur d'amplitude pour la sous-période en fonction de la comparaison, avec une détermination du changement dans les valeurs d'amplitude pendant ladite période de temps prédéterminée, et une détermination de la densité du liquide en fonction de ce changement.

22. Procédé selon la revendication 15, dans lequel lesdits niveaux de seuil au nombre d'un ou de plusieurs de la fréquence sont situés dans la plage allant de 1 à 100 Hz.

23. Procédé selon l'une quelconque des revendications 15 à 22, dans lequel ladite période de temps prédéterminée est située dans la plage allant de 0 à 60 minutes.

24. Procédé selon l'une quelconque des revendications 15 à 23, dans lequel l'unité de mesure de densité est adaptée de façon à délivrer un signal de capteur modifié qui a été ajusté vis-à-vis de la densité déterminée.

25. Procédé selon l'une quelconque des revendications 15 à 24, tel que le procédé comprend une réception par l'unité de mesure de densité d'un signal de température représentant la température du liquide, l'unité de mesure de densité étant adaptée de façon à déterminer la densité du liquide à au moins deux températures différentes, des valeurs de densité et de température coordonnées étant comparées à des valeurs de densité et de température mémorisées pour différents liquides, et toute concordance avec l'une quelconque des valeurs mémorisées étant utilisée comme base pour la génération d'un signal de liquide qui indique quel type de liquide se trouve dans le récipient.
